# EUROPÄISCHE PATENTANMELDUNG

(11) **EP 3 460 448 A1**
(43) Veröffentlichungstag der Anmeldung: **27.03.2019**
(21) Anmeldenummer: 17001575.4
(22) Anmeldetag: 22.09.2017
(51) Int. Cl.: G01N 15/02, B07B 13/18

(54) **VERFAHREN UND MEHRDECKSIEBMASCHINE ZUR BESTIMMUNG DER EINZELNEN KORNKLASSEN EINER MATERIALPROBE**

(71) Anmelder: Siebtechnik GmbH, 45478 Mülheim an der Ruhr (DE)
(72) Erfinder: Coppers, Matthias, 45136 Essen (DE); Pollmanns, Jürg, 41372 Niederkrüchten (DE); Correl, Jens, 47445 Moers (DE)
(74) Vertreter: Patentanwaltskanzlei Methling

(57) **Zusammenfassung**

Die Erfindung betrifft ein Verfahren zur Bestimmung der einzelnen Kornklassen einer Materialprobe unter Verwendung einer Mehrdecksiebmaschine (1) mit einer Mehrzahl übereinander angeordneter Siebe mit nach unten absteigender Lochgröße der Siebe zur Trennung der Kornklassen, wobei nach der Aufbringung der Materialprobe auf das oberste Sieb für die Dauer eines ersten festlegbaren Zeitabschnittes und/oder bis zur Detektion der Beendigung der Trennung der Komklassen eine Klassierungsphase zur Trennung der Kornklassen und anschließend für die Dauer eines zweiten festlegbaren Zeitabschnittes eine Transportphase zum Abtransport der nach Kornklassen getrennten Materialprobe zu einzelnen den Kornklassen zugeordneten Sammelbehältern durchgeführt wird. Ferner betrifft die Erfindung eine Mehrdecksiebmaschine (1) zur Ausführung des Verfahrens.

## Beschreibung

Die Erfindung betrifft ein Verfahren zur Bestimmung der einzelnen Kornklassen einer Materialprobe unter Verwendung einer Mehrdecksiebmaschine mit einer Mehrzahl übereinander angeordneter Siebe mit nach unten absteigender Lochgröße der Siebe zur Trennung der Kornklassen.

Ferner betrifft die Erfindung eine Mehrdecksiebmaschine zur Ausführung des Verfahrens.

Es sind verschiedene Verfahren und Vorrichtungen zur Bestimmung der einzelnen Kornklassen einer Materialprobe bekannt. Dabei wird eine Materialprobe unbekannter Zusammensetzung auf eine Anordnung mehrerer übereinander angeordneter Siebe aufgebracht und mittels der Siebe klassiert und somit eine Trennung der Kornklassen vorgenommen. Anschließend wird der Rückstand eines jedes einzelnen Siebes in einen Behälter gefüllt und anschließend ausgewogen.

Nachteilig ist dabei der hohe Zeitaufwand für die Durchführung des Umfüllens und Auswiegens der einzelnen Komklassen.

Die Aufgabe der Erfidung ist es, ein Verfahren zur Bestimmung der einzelnen Kornklassen einer Materialprobe und eine Mehrdecksiebmaschine zur Ausführung des Verfahrens anzugeben, mittels derer eine automatische und zeitsparende Bestimmung der einzelnen Kornklassen der Materialprobe ermöglicht wird.

Diese Aufgabe wird erfindungsgemäß durch ein Verfahren gemäß Anspruch 1 und eine Mehrdecksiebmaschine gemäß Anspruch 12 gelöst Vorteilhafte Weiterbildungen der Erfindung sind in den abhängigen Ansprüchen angegeben.

Besonders vorteilhaft bei dem Verfahren zur Bestimmung der einzelnen Kornklassen einer Materialprobe unter Verwendung einer Mehrdecksiebmaschine mit einer Mehrzahl übereinander angeordneter Siebe mit nach unten absteigender Lochgröße der Siebe zur Trennung der Kornklassen ist es, dass nach der Aufbringung der Materialprobe auf das oberste Sieb für die Dauer eines ersten festlegbaren Zeitabschnittes und/oder bis zur Detektion der Beendigung der Trennung der Kornklassen eine Klassierungsphase zur Trennung der Kornklassen und anschließend für die Dauer eines zweiten festlegbaren Zeitabschnittes eine Transportphase zum Abtransport der nach Kornklassen getrennten Materialprobe zu einzelnen den Kornklassen zugeordneten Sammelbehältern durchgeführt wird.

Dabei können insbesondere normgerechte Siebe zum Einsatz kommen, d.h. Siebe mit einer Machenweite gemäß einer Norm. Insbesondere kann mittels des Verfahrens eine Bestimmung der einzelnen Kornklassen gemäß den Normen DIN 66165, ISO 728 oder ISO 4701 erfolgen.

Die Anzahl der Siebe kann dabei nach einer Norm und/oder nach einer gewünschten Vorgabe oder Spezifikation festgelegt werden.

Die Klassierungsphase zur Trennung der Kornklassen bildet dabei einen ersten Zeitabschnitt, der so zu bemessen ist, dass die Klassierung, d.h. die Trennung der Kornklassen vorgabegemäß zuverlässig erfolgt und beendet ist. Hieran schließt sich die Transportphase zum Abtransport der nach Kornklassen getrennten Materialprobe an. Die Transportphase bildet somit einen zweiten Zeitabschnitt im Rahmen des Verfahrens zur Bestimmung der einzelnen Kornklassen und dient der Überführung der klassierten Kornklassen in Sammelbehälter. Dabei ist ein Sammelbehälter jeweils einer bestimmten Kornklasse zugeordnet.

Die Beendigung der Trennung der Kornklassen kann durch eine Detektion festgestellt und definiert werden, sobald keine weiteren Bestandteile der Materialprobe mehr durch die Siebe nach unten gelangen. Hierdurch ist insbesondere eine automatisierte Trennung nach Kornklassen, also das Klassieren möglich.

Besonders vorteilhaft ist es, dass sowohl die Klassierungsphase zur Trennung der Kornklassen als auch die daran anschließende Transportphase zum Abtransport der nach Kornklassen getrennten Materialprobe in einzelne jeder Kornklasse zugeordneter Sammelbehälter automatisch ohne weitere erforderliche Eingriffe durchgeführt werden können. Anschließend können die einzelnen Kornklassen ausgewogen werden. Sofern die einzelnen Sammelbehälter jeweils eine Wäägeeinrichtung zugeordnet und/oder zugeführt werden, kann auch das Auswiegen der einzelnen Kornklassen nach der Trennung und der Überführung in die einzelnen Sammelbehälter automatisch erfolgen.

Die Trennung der Kornklassen während der Klassierungsphase kann durch Vibrationen der Siebe und/oder Ultraschall und/oder Luftströme beispielsweise durch eine rotierende Düse herbeigeführt werden.

Besonders bevorzugt werden die Siebe der Mehrdecksiebmaschine während der Klassierungsphase und/oder während der Transportphase schwingungserregt.

Dabei kann die Schwingungserregung der Siebe während der Klassierungsphase unter einem ersten Winkel relativ zur Ebene der Siebe erfolgen und es kann daran anschließend die Schwingungserregung der Siebe während der Transportphase unter einem zweiten Winkel relativ zur Ebene der Siebe erfolgen.

Vorzugsweise erfolgt während der Klassierungsphase eine Schwingungserregung der Siebe senkrecht oder unter einem spitzen Winkel gegenüber der Senkrechten, sodass die resultierende Wurfbewegung eine von einem an jedem Sieb stirnseitig angeordneten Auslass der Siebe wegweisende Komponente aufweist.

Aufgrund der Schwingungserregung der Siebe verhält sich das auf die Siebe aufgebrachte Material wie eine Flüssigkeit. Um ein unerwünschtes Abfließen von Material in den an jedem Sieb stirnseitig angeordneten Auslass der Siebe zu vermeiden, ist erfolgt die Schwingungserregung der Siebe derart, dass die resultierende Wurfbewegung eine von einem an jedem Sieb stirnseitig angeordneten Auslass der Siebe wegweisende Komponente aufweist. Hierdurch wird ein unerwünschtes Abfließen von Material bereits während der Klassierungsphase vermieden. Alternativ oder kumulativ zu einer Schwingungserregung der Siebe senkrecht oder unter einem spitzen Winkel gegenüber der Senkrechten können die Siebe unter einem Winkel von beispielsweise 1° bis 10° gegenüber der Horizontalen geneigt sein, sodass die Siebe in Bezug auf den Auslass an einem stirnseitigen Ende eine negative Neigung aufweisen, also ansteigend verlaufen.

Vorzugsweise erfolgt während der Transportphase eine Schwingungserregung der Siebe unter einem Winkel gegenüber der Senkrechten, sodass die aus der Schwingungserregung resultierende Wurfbewegung eine Komponente in Richtung auf einen an jedem Sieb stirnseitig angeordneten Auslass der Siebe aufweist

Durch eine Komponente der die aus der Schwingungserregung resultierenden Wurfbewegung in Richtung auf einen an einem stirnseitigen Ende der Siebe angeordneten Auslass erfolgt ein Abtransport des Materials von den Sieben über den jeweiligen Auslass zu den einzelnen Sammelbehältern.

Dabei ist der Begriff der Senkrechten insbesondere so zu verstehen, dass die Schwingungserregung eine Komponente gegenüber der absoluten im Raum stehenden Senkrechten und/oder gegenüber der auf dem Sieb stehenden Senkrechten aufweist, wenn das Sieb eine Neigung gegenüber der Horizontalen aufweist, sodass sich in der resultierenden Wurfbewegung eine Bewegungskomponente in Richtung auf den an einem stirnseitigen Ende der Siebe angeordneten Auslass ergibt.

Bevorzugt erfolgt eine Schwingungserregung der Siebe mittels dreier oder mehr Unwuchtmotoren, von denen jeweils zwei zur Erzeugung der Schwingungserregung gleichzeitig in Betrieb sind und wobei die Schwingungserregung der Siebe während der Klassierungsphase unter einem ersten Winkel relativ zur Ebene der Siebe mittels eines ersten Paares von Unwuchtmotoren erfolgt und die Schwingungserregung der Siebe während der Transportphase unter einem zweiten Winkel relativ zur Ebene der Siebe mittels eines zweiten Paares von Unwuchtmotoren erfolgt.

Bei der Anordnung von insgesamt drei Unwuchtmotoren können zwei unterschiedliche Paare von Unwuchtmotoren gebildet werden. Jedes Paar von Unwuchtmotoren erzeugt dabei eine Schwingungserregung der Siebe in einer bestimmten Ausrichtung relativ zu den Sieben, woraus wiederum eine bestimmte Richtung der Wurfbewegung des auf den Sieben aufliegenden Materials resultiert. Drei Unwuchtmotoren lassen somit die Bildung zweier verschiedener Paare von Unwuchtmotoren zu mit den daraus resultierenden zwei unterschiedlichen Wurfbewegungen des Slebgutes. Es sind dabei stets zwei gegenläufig rotierenden Unwuchtmotoren in Betrieb und bewirken die Schwingungserregung der Siebe. Das erste Paar von Unwuchtmotoren ist dabei ungleich des zweiten Paars von Unwuchtmotoren.

Vorzugsweise ist die Neigung der Siebe der Mehrdecksiebmaschine variabel, insbesondere kann die Neigung ist bei der Trennung der Kornklassen in Bezug auf einen stirnseitig an jedem Sieb angeordneten Auslass negativ und/oder es kann die Neigung der Siebe bei dem Abtransport der nach Kornklassen getrennten Materialprobe in Bezug auf einen stirnseitig an jedem Sieb angeordneten Auslass positiv sein.

Mit dem Begriff der negativen Neigung in Bezug auf den stirnseitig an jedem Sieb angeordneten Auslass ist dabei ein Anstieg in Richtung auf den Auslass gemeint. Mit dem Begriff der positiven Neigung in Bezug auf den stirnseitig an jedem Sieb angeordneten Auslass ist dabei ein zum Auslass hin abfallender Verlauf gemeint.

Bevorzugt wird die Materialprobe vor dem Aufbringen auf die Mehrdecksiebmaschine ausgewogen und/oder dass nach der Trennung der Kornklassen der Materialprobe von jedem Sieb klassiertes Material über einen Auslass in jeweils einem dem Sieb zugeordneten Sammelbehälter aufgefangen und ausgewogen wird.

Durch ein Auswiegen vor und nach der Klassierung der Materialprobe können die einzelnen Kornklassen zuverlässig und insbesondere normgerecht bestimmt werden.

Vorzugsweise wird die physikalische Beendigung der Trennung der Kornklassen mittels eines Erfassungssystems insbesondere optisch und/oder radiometrisch detektiert und als Ende der Klassierungsphase definiert und anschließend die Transportphase insbesondere durch eine Änderung der relativen Richtung der Schwingungserregung der Siebe eingeleitet.

Durch eine Detektion der Beendigung der Trennung der Kornklassen mittels eines Erfassungssystems und der nachfolgend automatisch eingeleiteten Transportphase kann das gesamte Verfahren weiter automatisiert werden. Ferner kann die Dauer der Klassierungsphase der tatsächlich erforderlichen Zeit für die Durchführung der Trennung der Kornklassen angepasst werden. Mit dem Begriff der physikalischen Beendigung der Trennung der Kornklassen ist dabei jener Zeitpunkt gemeint, ab dem keine weiteren Materialbestandteile mehr durch die einzelnen Siebe nach unten durchgehen.

Vorzugsweise wird die Beendigung des Abtransportes der nach Kornklassen getrennten Materialprobe mittels eines Erfassungssystems insbesondere optisch und/oder radiometrisch detektiert und als Ende der Transportphase definiert, insbesondere dass eine Schwingungserregung der Siebe beendet wird. Mit dem Begriff der Beendigung des Abtransportes der nach Kornklassen getrennten Materialprobe ist dabei das tatsächliche Ende der Transportphase gemeint, wenn das gesamte Material zu den Sammelbehältern abtransportiert ist. Die Detektion des Endes des Abtransportes des nach Kornklassen klassierten Materials gestattet eine weitere Automatisierung des Verfahrens.

Bevorzugt ist die Dauer des ersten festlegbaren Zeitraumes für die Klassierungsphase zur Trennung der Kornklassen größer oder gleich einer Mindestdauer, um eine Klassierung der Materialprobe gemäß einer Norm vorzunehmen. Mit der Einhaltung einer solchen Mindestdauer kann somit den Vorgaben einer bestimmten Norm wie beispielsweise der DIN 66165 und/oder der ISO 728 und/oder der ISO 4701 entsprochen werden.

Besonders vorteilhaft bei der Mehrdecksiebmaschine zur Ausführung des Verfahrens, mit einer Mehrzahl übereinander angeordneter Siebe mit nach unten absteigender Lochgröße der Siebe, wobei die Siebe zur Trennung der Kornklassen schwingungserregt werden, ist es, dass die Mehrdecksiebmaschine drei oder mehr Unwuchtmotoren aufweist, sodass mit jeweils zwei gleichzeitig gegensinnig drehenden Unwuchtmotoren unter verschiedenen Winkeln stehende Schwingungserregungen der Siebe mit unterschiedlichen daraus resultierenden Wurfbewegungen von auf die Siebe aufgebrachten Siebgutes erzeugbar sind.

Die Mehrdecksiebmaschine weist somit eine Anzahl von zwei oder mehr insbesondere normgerechten Sieben auf, die eine Klassierung einer Materialprobe ermöglichen, insbesondere auch eine Klassierung gemäß einer genormten Vorgabe beispielsweise gemäß der DIN 66165 und/der gemäß der ISO 728 und/oder gemäß der ISO 4701. Mit dem Begriff der normgerechten Siebe sind damit derartige Siebe gemeint, deren Lochgröße und/oder Maschenweite der Vorgabe einer Norm wie beispielsweise der DIN 66165 und/oder der ISO 728 und/oder der ISO 4701 entspricht.

Die Siebe der Mehrdecksiebmaschine können somit insbesondere ein auf einem Grundrahmen befestigtes Paket von übereinander angeordneten Sieben bilden, deren Maschenweite von oben nach unten kontinuierlich abnimmt, um mittels der Siebe eine Trennung nach Kornklassen durchführen zu können.

Durch eine Schwingungserregung des Grundrahmens erfolgt daher gleichzeitig eine entsprechende Schwingungserregung der Siebe.

Es erfolgt somit eine Schwingungserregung der Siebe mittels dreier oder mehr Unwuchtmotoren, von denen jeweils zwei zur Erzeugung der Schwingungserregung gleichzeitig in Betrieb sind und wobei die Schwingungserregung der Siebe während der Klassierungsphase unter einem ersten Winkel relativ zur Ebene der Siebe mittels eines ersten Paares von Unwuchtmotoren erfolgt und die Schwingungserregung der Siebe während der Transportphase unter einem zweiten Winkel relativ zur Ebene der Siebe mittels eines zweiten Paares von Unwuchtmotoren erfolgt.

Bei der Anordnung von insgesamt drei Unwuchtmotoren können insbesondere zwei unterschiedliche Paare von Unwuchtmotoren gebildet werden Jedes Paar von Unwuchtmotoren erzeugt dabei eine Schwingungserregung der Siebe in einer bestimmten Ausrichtung relativ zu den Sieben, woraus wiederum eine bestimmte Richtung der Wurfbewegung des auf den Sieben aufliegenden Materials resultiert. Drei Unwuchtmotoren lassen somit die Bildung zweier verschiedener Paare von Unwuchtmotoren zu mit den daraus resultierenden zwei unterschiedlichen Wurfbewegungen des Siebgutes. Es sind dabei stets zwei gegenläufig rotierenden Unwuchtmotoren in Betrieb und bewirken die Schwingungserregung der Siebe. Das erste Paar von Unwuchtmotoren ist dabei ungleich des zweiten Paars von Unwuchtmotoren.

Die Schwingungserregung kann insbesondere elliptisch sein. Durch einen Wechsel der Paare von Unwuchtmotoren wird somit die Ausrichtung und Neigung der Ellipse der Schwingungserregung gegenüber den Sieben variiert.

Vorzugsweise weisen die Siebe eine rechteckige Grundform auf und weisen ferner an einer Stirnseite jeweils einen Auslass auf, wobei jeder Auslass in einen dem jeweiligen Sieb zugeordneten Sammelbehälter mündet, insbesondere können die Siebe in Richtung auf den Auslass eine negative Neigung aufweisen.

Mit dem Begriff der negativen Neigung ist dabei wie erläutert ein Anstieg der Siebe in Richtung auf den Auslass gemeint. Der Anstieg der Siebe in Richtung auf den Auslass kann durch eine Anstellung der Siebe um 1° bis 10° gegenüber der Horizontalen erfolgen.

Durch die Zuordnung jeweils eines Sammelbehälters zu jedem einzelnen Sieb können die einzelnen Kornklassen unmittelbar aufgefangen und ausgewogen werden.

In einer bevorzugten Ausführungsform ist die Neigung der Siebe gegenüber der Horizontalen variabel. Durch eine Variation der Neigung der Siebe gegenüber der Horizontalen kann die Neigung während der Klassierungsphase eine andere sein, als während der Transportphase. Hierdurch können sowohl die Trennung nach Kornklassen als auch der Abtransport erleichtert werden.

Die Neigung der Siebe kann insbesondere durch eine variable Lagerung und/oder durch eine Luftfederung und/oder hydraulisch variierbar sein.

Vorzugsweise sind drei Unwuchtmotoren in einer Ebene liegend angeordnet. Durch die Anordnung von drei Unwuchtmotoren können mehrere verschiedene Paare von Unwuchtmotoren gebildet werden, aus deren Betrieb jeweils eine andere Richtung der Schwingungserregung der Sieb resultiert. Ein jeweils paarweiser Betrieb von jeweils zwei gegenläufig betriebenen Unwuchtmotoren führt zu unterschiedlichen Winkeln der Schwingungserregung und damit zu unterschiedlichen Richtungen der daraus resultierenden Wurfbewegung auf den Sieben. Durch die Variation der Richtungen der daraus resultierenden Wurfbewegung können sowohl die Trennung der Kornklassen als auch der anschließende Transport in die Sammelbehälter durchgeführt werden, indem während des Trennens ein anderes Paar von Unwuchtmotoren betrieben wird, als während des Transportes.

Die Anordnung der Motoren in einer Ebene bedeutet, dass die Drehachsen der drei Unwuchtmotoren In einer Ebene liegen. Hierdurch wird die Konstruktion und Fertigung der Mehrdecksiebmaschine vereinfacht.

Die Unwuchtmotoren können insbesondere dergestalt angeordnet sein, dass die resultierende Schwingungserregung der Siebe bei dem Betrieb des ersten Paares von Unwuchtmotoren während der Klassierungsphase senkrecht nach oben durch den Schwerpunkt der Mehrdecksiebmaschine gerichtet ist. Ferner können die Unwuchtmotoren weiterhin dergestalt angeordnet sein, dass die resultierende Schwingungserregung der Siebe bei dem Betrieb des zweiten Paares von Unwuchtmotoren während der Transportphase unter einem Winkel gegenüber der Senkrechten durch den Schwerpunkt der Mehrdecksiebmaschine gerichtet ist, sodass die Richtung der Schwingungserregung eine Komponente in Richtung auf den stirnseitig an den Sieben angeordneten Auslass aufweist. Durch den Wechsel zwischen dem ersten und dem zweiten Paar von Unwuchtmotoren kann somit zunächst die Klassierungsphase und anschließend die Transportphase durchgeführt werden.

Das erste Paar von Unwuchtmotoren, welches während der Klassierungsphase in Betrieb ist, ist in diesem Fall symmetrisch zum Schwerpunkt der bewegten Teile der Mehrdecksiebmaschine angeordnet, woraus eine senkrechte Schwingungserregung der bewegten Teile der Mehrdecksiebmaschine resultiert. Das zweite Paar von Unwuchtmotoren, welches während der Transportphase in Betrieb ist, ist hingegen unsymmetrisch in Bezug auf den Schwerpunkt der bewegten Teile der Mehrdecksiebmaschine angeordnet, woraus eine Schwingungserregung der bewegten Teile der Mehrdecksiebmaschine unter einem von der Senkrechten abweichenden Richtung resultiert, d.h dass während der Transportphase eine Schwingungserregung der bewegten Teile der Mehrdecksiebmaschine unter einem Winkel gegenüber der Senkrechten erfolgt. Aus der hieraus resultierenden Wurfbewegung mit einer Komponente in Transportrichtung resultiert der Abtransport in Richtung auf den stirnseitig an den Sieben angeordneten Auslass und weiter zu den Sammelbehältern.

Vorzugsweise weisen die Siebe jeweils einen Siebrahmen auf, welcher unterhalb der Siebe ferner ein gegenüber dem Sieb gröberes Netz aufweist, wobei zwischen dem Sieb und dem Netz Klopfkörper angeordnet sind. Diese Klopfkörper können sich zwischen dem Sieb und dem Netz frei bewegen und halten das Sieb während des Betriebs sowohl während der Klassierungsphase als auch während der Transportphase frei von Verstopfungen. Das Netz kann beispielsweise durch ein grobes Gewebe, grobes Sieb oder Lochblech gebildet sein und dient nur dazu, ein Herunterfallen der Klopfkörper zu verhindern. Die Klopfkörper können beispielsweise durch Kunststoffkugeln gebildet sein.

Ein Ausführungsbeispiel einer Mehrdecksiebmaschine ist in den Figuren dargestellt und wird nachfolgend erläutert. Es zeigen:
- Fig. 1: Die Frontansicht einer Mehrdecksiebmaschine;
- Fig. 2: den Schnitt A - A nach Fig. 1;
- Fig. 3: das Detail B nach Fig. 2.

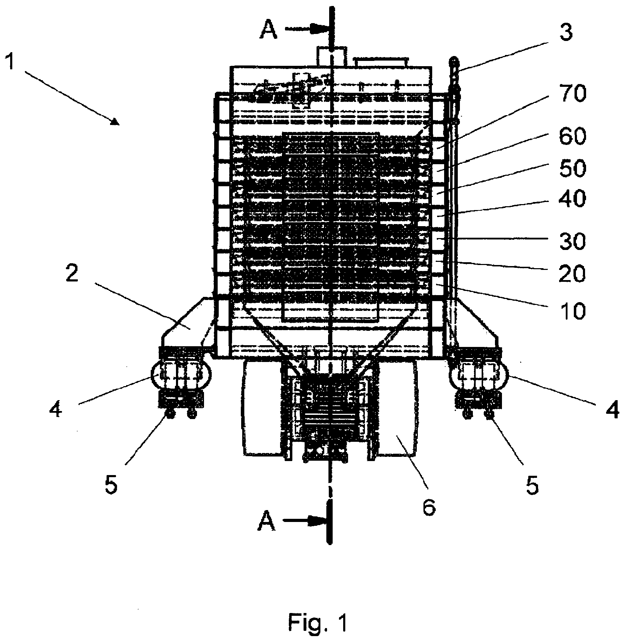

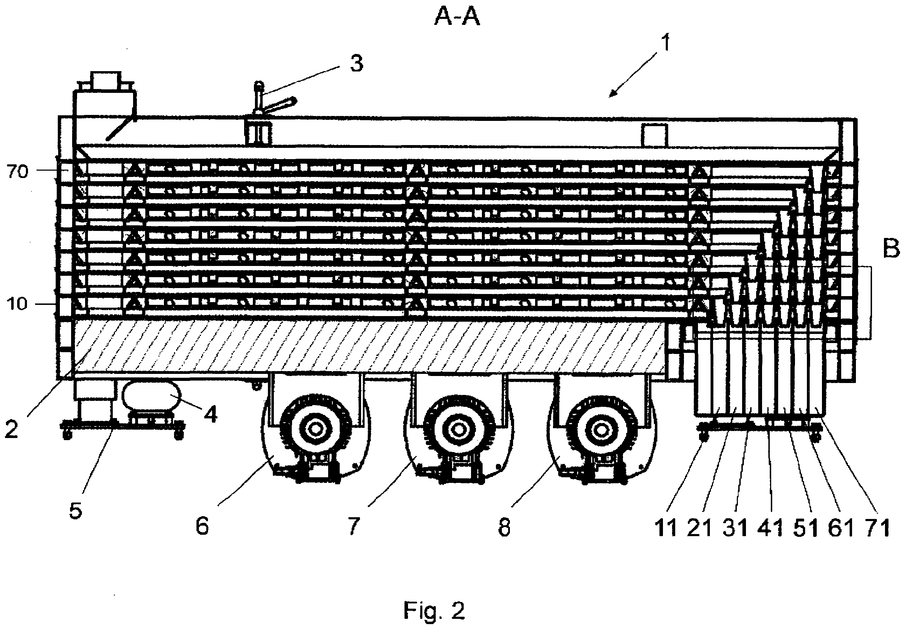

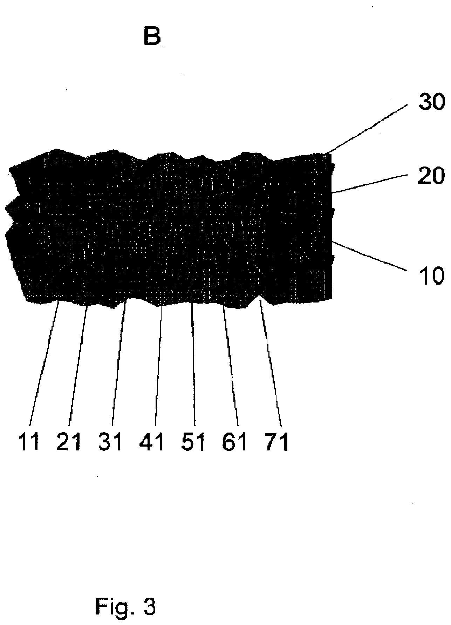

In Figur 1 ist Frontansicht einer Mehrdecksiebmaschine 1 dargestellt. Auf dem Rahmen 2 sind Siebdecks 10, 20, 30, 40, 50, 60, 70 mittels Spannmitteln 3 festgelegt. Der Rahmen 3 der Mehrdecksiebmaschine 1 ist auf luftgefüllten Gummibälgen 4 gelagert. Die Gummibälge 4 sind wiederum am Fundament 5 festgelegt. Die Gummibälge 4 gestatten ein Schwingen des Rahmens 3 mit den am Rahmen 3 befestigten Siebdecks 10, 20, 30, 40, 50, 60, 70. Das Schwingen des Rahmens 3 wird durch Unwuchtmotoren 6, 7, 8 herbeigeführt, die in der Ansicht gemäß Figur 2 erkennbar sind. Figur 2 zeigt den Schnitt A - A nach Figur 2. Figur 3 zeigt das Detail B nach Fig. 2.

Während der Klassierungsphase zur Trennung der Kornklassen sind die außen liegenden Unwuchtmotoren 6, 8 in Betrieb und werden gegenläufig betrieben.

Diese beiden Unwuchtmotoren 6, 8 bewirken eine senkrecht stehende Schwingungserregung des Rahmens 3, aufgrund derer der Rahmen 3 der Mehrdecksiebmaschine 1 mitsamt den am Rahmen 3 befestigten Siebdecks 10, 20, 30, 40, 50, 60, 70 in Schwingung versetzt wird. Da die Schwingungserregung senkrecht steht, ist auch die daraus resultierende Wurfbewegung des auf die Siebdecks 10, 20, 30, 40, 50, 60, 70 aufgebrachten Materials senkrecht nach oben gerichtet. Hierdurch erfolgt eine Trennung der Materialprobe nach Kornklassen, wobei das Material der einzelnen Kornklassen auf den Siebdecks 10, 20, 30, 40, 50, 60, 70 verbleibt.

Nach Beendigung der Klassierungsphase werden die Unwuchtmotoren 6, 8 gestoppt und stattdessen die Unwuchtmotoren 6, 7 gegenläufig betrieben. Durch den gegenläufigen Betrieb des in Figur 2 links angeordneten Unwuchtmotors 6 und des mittig angeordneten Unwuchtmotors 7 wird eine Schwingungserregung des Rahmens 3, die gegenüber der Senkrechten geneigt ist und eine Komponente in der Bildebene gemäß Figur 2 nach rechts in Richtung auf den Auslass eines jeden Siebdecks 10, 20, 30, 40, 50, 60, 70 aufweist. Hieraus resultiert eine Wurfbewegung, die ebenfalls eine Komponente in der Bildebene gemäß Figur 2 nach rechts in Richtung auf den Auslass eines jeden Siebdecks 10, 20, 30, 40, 50, 60, 70 aufweist. Hieraus folgt ein Abtransport des klassierten Siebgutes über die Auslässe 11, 21, 31, 41, 51, 61, 71. Jedem Auslass 11, 21, 31, 41, 51, 61, 71 ist ein nicht dargestellter Sammelbehälter nachgeschaltet, mittels dessen die klassierten Fraktionen aufgefangen und einer gravimetrischen Auswertung nach Kornklassen zugeführt werden. In Figur 3 ist das Detail B nach Figur 2 vergrößert dargestellt. Erkennbar ist die eindeutige Zuordnung eines jeden einzelnen Auslasses 11, 21, 31, 41, 51, 61, 71 zu jeweils einem Siebdeck 10, 20, 30, 40, 50, 60, 70.

Jedes Siebdeck 10, 20, 30, 40, 50, 60, 70 ist durch einen Rahmen gebildet, welcher jeweils ein normgerechtes Sieb aufweist. Ferner trägt jeder Rahmen unterhalb des Siebes ein Haltegitter. Zwischen dem jeweiligen Sieb und dem Haltegitter sind frei bewegliche Klopfkörper angeordnet, welche die Siebe von Partikeln frei halten.

In einer nicht dargestellten Alternative sind die Siebdecks leicht ansteigend von beispielsweise 1°-10° angeordnet, damit das fluidisierte Material nicht vorzeitig vom Siebbelag wandert, d.h. nicht bereits während der Klassierungsphase und vor Beginn der Transportphase.

In einer weiteren Alternative kann eine Neigungsverstellung der Siebdecks vorgesehen sein. Hierdurch kann der Transport des klassierten Materials erleichtert werden. Bei einem Absenken des Rahmens mit den Siebdecks bis zum Anschlga kann zusätzliches Klopfen die Maschine reinigen. Insbesondere können die Klassierungsphase zur Trennung der Kornklassen und anschließend die Transportphase zum Abtransport der nach Kornklassen getrennten Materialprobe bei unverändertem äußeren Antrieb durch eine Verstellung der Neigung der Siebdecks durchgeführt werden.

Mittels des erfindungsgemäßen Verfahrens und der erfindungsgemäßen Mehrdecksiebmaschine kann eine automatische Analysensiebung auch für große Einzelproben beispielsweise im Bereich von 1 kg bis 100 kg mit Körnungen bis ca. 60 mm normgerecht mit beliebig einzustellenden Siebzeiten von beispielsweise 3 bis 30 Minuten durchgeführt werden, wobei dann die Rückstände einer Verwiegung zugeführt werden können. Dabei erfolgt die Klassierung durch normgerechte Siebgewebe oder Lochbleche. Durch eine Änderung der Schwingungsparameter erfolgt ein Austrag der einzelnen Siebfraktionen zur gravimetrischen Bestimmung der einzelnen Siebfraktionen.

Dies wird ermöglicht durch die Kombination einer Mehrdecksiebmaschine mit einem Antrieb, mittels dessen mindestens zwei Transportzustände eingestellt werden können. Dieses kann durch die Anordnung von 3 Unwuchtmotoren, von den nur jeweils zwei Motore gegensinnig drehen, durch eine elektronisch einzustellenden Ellipsenantrieb oder mehrere Antriebe, die in unterschiedle Richtungen wirken, erzielt werden. Besonders vorteilhaft ist es, dass die Rückstände von den Siebdecks ohne ein Zerlegen oder Kippen durch den entsprechenden Antrieb während der Transportphase von der Mehrdecksiebmaschine separat abgeführt werden und gravimetrisch bestimmt werden können.

## Patentansprüche

1. Verfahren zur Bestimmung der einzelnen Kornklassen einer Materialprobe unter Verwendung einer Mehrdecksiebmaschine (1) mit einer Mehrzahl übereinander angeordneter Siebe mit nach unten absteigender Lochgröße der Siebe zur Trennung der Kornklassen, **dadurch gekennzeichnet, dass** nach der Aufbringung der Materialprobe auf das oberste Sieb für die Dauer eines ersten festlegbaren Zeitabschnittes und/oder bis zur Detektion der Beendigung der Trennung der Kornklassen eine Klassierungsphase zur Trennung der Kornklassen und anschließend für die Dauer eines zweiten festlegbaren Zeitabschnittes eine Transportphase zum Abtransport der nach Kornklassen getrennten Materialprobe zu einzelnen den Kornklassen zugeordneten Sammelbehältern durchgeführt wird.

2. Verfahren nach Anspruch 1, **dadurch gekennzeichnet, dass** die Siebe der Mehrdecksiebmaschine (1) während der Klassierungsphase und/oder während der Transportphase schwingungserregt werden.

3. Verfahren nach Anspruch 2, **dadurch gekennzeichnet, dass** die Schwingungserregung der Siebe während der Klassierungsphase unter einem ersten Winkel relativ zur Ebene der Siebe erfolgt und dass daran anschließend die Schwingungserregung der Siebe während der Transportphase unter einem zweiten Winkel relativ zur Ebene der Siebe erfolgt.

4. Verfahren nach einem der vorherigen Ansprüche, **dadurch gekennzeichnet, dass** während der Klassierungsphase eine Schwingungserregung der Siebe senkrecht oder unter einem spitzen Winkel gegenüber der Senkrechten erfolgt, sodass die resultierende Wurfbewegung eine von einem an jedem Sieb stirnseitig angeordneten Auslass der Siebe wegweisende Komponente aufweist.

5. Verfahren nach einem der vorherigen Ansprüche, **dadurch gekennzeichnet, dass** während der Transportphase eine Schwingungserregung der Siebe unter einem Winkel gegenüber der Senkrechten erfolgt, sodass die aus der Schwingungserregung resultierende Wurfbewegung eine Komponente in Richtung auf einen an jedem Sieb stirnseitig angeordneten Auslass der Siebe aufweist.

6. Verfahren nach einem der vorherigen Ansprüche, **dadurch gekennzeichnet, dass** eine Schwingungserregung der Siebe mittels dreier oder mehr Unwuchtmotoren (6, 7, 8) erfolgt, von denen jeweils zwei zur Erzeugung der Schwingungserregung gleichzeitig in Betrieb sind und wobei die Schwingungserregung der Siebe während der Klassierungsphase unter einem ersten Winkel relativ zur Ebene der Siebe mittels eines ersten Paares von Unwuchtmotoren (6, 8) erfolgt und die Schwingungserregung der Siebe während der Transportphase unter einem zweiten Winkel relativ zur Ebene der Siebe mittels eines zweiten Paares von Unwuchtmotoren (6, 7) erfolgt.

7. Verfahren nach einem der vorherigen Ansprüche, **dadurch gekennzeichnet, dass** die Neigung der Siebe der Mehrdecksiebmaschine (1) variabel ist, insbesondere dass die Neigung bei der Trennung der Kornklassen in Bezug auf einen stirnseitig an jedem Sieb angeordneten Auslass (11, 21, 31, 41, 51, 61, 71) negativ und/oder wobei die Neigung der Siebe bei dem Abtransport der nach Kornklassen getrennten Materialprobe in Bezug auf einen stirnseitig an jedem Sieb angeordneten Auslass (11, 21, 31, 41, 51, 61, 71) positiv ist.

8. Verfahren nach einem der vorherigen Ansprüche, **dadurch gekennzeichnet, dass** die Materialprobe vor dem Aufbringen auf die Mehrdecksiebmaschine (1) ausgewogen wird und/oder dass nach der Trennung der Kornklassen der Materialprobe von jedem Sieb klassiertes Material über einen Auslass (11, 21, 31, 41, 51, 61, 71) in jeweils einem dem Sieb zugeordneten Sammelbehälter aufgefangen und ausgewogen wird.

9. Verfahren nach einem der vorherigen Ansprüche, **dadurch gekennzeichnet, dass** die physikalische Beendigung der Trennung der Kornklassen mittels eines Erfassungssystems insbesondere optisch und/oder radiometrisch detektiert und als Ende der Klassierungsphase definiert wird und anschließend die Transportphase insbesondere durch eine Änderung der relativen Richtung der Schwingungserregung der Siebe eingeleitet wird.

10. Verfahren nach einem der vorherigen Ansprüche, **dadurch gekennzeichnet, dass** die Beendigung des Abtransportes der nach Kornklassen getrennten Materialprobe mittels eines Erfassungssystems insbesondere optisch und/oder radiometrisch detektiert und als Ende der Transportphase definiert wird, insbesondere eine Schwingungserregung der Siebe beendet wird.

11. Verfahren nach einem der vorherigen Ansprüche, **dadurch gekennzeichnet, dass** die Dauer des ersten festlegbaren Zeitraumes für die Klassierungsphase zur Trennung der Kornklassen größer oder gleich einer Mindestdauer Ist, um eine Klassierung der Materialprobe gemäß einer Norm vorzunehmen.

12. Mehrdecksiebmaschine (1) zur Ausführung des Verfahrens nach einem der vorherigen Ansprüche, mit einer Mehrzahl übereinander angeordneter Siebe mit nach unten absteigender Lochgröße der Siebe, wobei die Siebe zur Trennung der Kornklassen schwingungserregt werden, **dadurch gekennzeichnet, dass** die Mehrdecksiebmaschine drei oder mehr Unwuchtmotoren (6, 7, 8) aufweist, sodass mit jeweils zwei gleichzeitig gegensinnig drehenden Unwuchtmotoren (6, 7, 8) unter verschiedenen Winkeln stehende Schwingungserregungen der Siebe mit unterschiedlichen daraus resultierenden Wurfbewegungen von auf die Siebe aufgebrachten Siebgutes erzeugbar sind.

13. Mehrdecksiebmaschine (1) nach Anspruch 12, **dadurch gekennzeichnet, dass** die Siebe eine rechteckige Grundform aufweisen und an einer Stirnseite jeweils einen Auslass (11, 21, 31, 41, 51, 61, 71) aufweisen, wobei jeder Auslass (11, 21, 31, 41, 51, 61, 71) in einen dem jeweiligen Sieb zugeordneten Sammelbehälter mündet, insbesondere dass die Siebe in Richtung auf den Auslass (11, 21, 31, 41, 51, 61, 71) eine negative Neigung aufweisen.

14. Mehrdecksiebmaschine (1) nach Anspruch 12 oder 13, **dadurch gekennzeichnet, dass** die Neigung der Siebe gegenüber der Horizontalen variabel ist.

15. Mehrdecksiebmaschine (1) nach einem der Ansprüche 12 bis 14, **dadurch gekennzeichnet, dass** drei Unwuchtmotoren (6, 7, 8) in einer Ebene liegend angeordnet sind.
